# EUROPEAN PATENT SPECIFICATION

(11) **EP 2 141 190 B1**
(45) Date of publication and mention of the grant of the patent: **28.03.2012**
(21) Application number: 09008445.0
(22) Date of filing: 29.06.2009
(51) Int. Cl.: C08J 7/04, C08J 7/18, H05B 33/08

(54) **Barrier laminate, gas barrier film, device and method for producing barrier laminate**
Sperrschichtlaminat, Gassperrfolie, Vorrichtung und Verfahren zur Herstellung des Sperrschichtlaminats
Stratifié barrière, film à barrière contre les gaz, dispositif et procédé de production du stratifié barrière

(30) Priority: 30.06.2008 JP 2008170744
(43) Date of publication of application: 06.01.2010
(73) Proprietor: FUJIFILM Corporation, Tokyo 106-0031 (JP)
(72) Inventor: Ito, Shigehide, Ashigarakami-gun Kanagawa 258-8577 (JP)
(74) Representative: HOFFMANN EITLE

(56) References cited:
- US-A1- 2007 228 365
- US-B1- 6 899 963
- DATABASE WPI Week 200818 Thomson Scientific, London, GB; AN 2008-C41297 XP002551011 OBIKAWA T: "Organic electroluminescent element for electronic device, has organic layer comprising polymer-liquid crystal layer containing organic compound having light cross-linkable mesogen and organic compound having liquid crystalline mesogen" & JP 2005 222777 A (SEIKO EPSON CORP) 18 August 2005 (2005-08-18) -& DATABASE CAPLUS [Online] CHEMICAL ABSTRACTS SERVICE, COLUMBUS, OHIO, US; 19 August 2005 (2005-08-19), OBIKAWA, TAKESHI: "Organic electroluminescent devices, manufacture thereof, and electronic devices integrating the same" XP002551014 retrieved from STN Database accession no. 2005:822769
- DATABASE WPI Week 200449 Thomson Scientific, London, GB; AN 2004-510695 XP002551012 & JP 2004 174713 A (SUMITOMO BAKELITE CO LTD) 24 June 2004 (2004-06-24) -& DATABASE CAPLUS [Online] CHEMICAL ABSTRACTS SERVICE, COLUMBUS, OHIO, US; 24 June 2004 (2004-06-24), KUBO, HIDEKI; ITO, HISASHI; SUGISAKI, ATSUSHI; IKEDA, MASAHIRO; EGUCHI, TOSHIMASA: "Optical multilayer plastic film sheet and electroluminescent display device using the sheet" XP002551015 retrieved from STN Database accession no. 2004:507664
- DATABASE WPI Week 200726 Thomson Scientific, London, GB; AN 2007-261841 XP002551013 & JP 2007 038529 A (KONICA CORP) 15 February 2007 (2007-02-15) -& DATABASE CAPLUS [Online] CHEMICAL ABSTRACTS SERVICE, COLUMBUS, OHIO, US; 15 February 2007 (2007-02-15), ARITA, HIROAKI; FUKUDA, KAZUHIRO: "Gas-barrier ceramic film laminates, resin substrates equipped with them, and organic electroluminescent devices therewith" XP002551016 retrieved from STN Database accession no. 2007:166400

## Description

### Field of the Invention

The present invention relates to a barrier laminate, a gas barrier film, and a device using the barrier laminate or the gas barrier film. The present invention also relates to a method for producing barrier laminate.

### Description of the Related Art

Heretofore, a barrier film having an organic layer has been studied (for example, JP-A-10-278167). Also, JP-A-2004-299230 discloses a gas barrier film having a planarizing layer comprising a cardo polymer. Demand of higher barrier property of a gas barrier film is increasing year after year.

US 2007/0228365 describes an organic anti-reflective coating polymer suitable for use in formation of a photoresist pattern acting as an ion implantation barrier during fabrication of a semi-conductor device. US 6,899,963 B1 describes an electroluminescent device including an anode, a spaced-apart-cathode, and polymer luminescent materials disposed between the anode and cathode, the polymeric luminescent materials include pendant 9,10-di-(2-naphthyl)anthracene-based polymers. JP 2005 222777 describes electroluminescent devices possessing organic functional layers including emitting, hole-injection or electron-injecting layers, formed from compositions containing copolymers of (A) photocrosslinkable mesogen compounds and (B) liquid crystal molecules by axis-selective photocrosslinking of (A) upon exposure to polarized light at isotropic or nematic temperature range and holding them at smectic temperature range to lead rearrangement within the cured layers.

Also, a gas barrier film used as a substrate of a device requires its surface smoothness.

### SUMMARY OF THE INVENTION

One object of the invention is to provide a barrier laminate having higher barrier property. Another object of the invention is to provide a barrier laminate having a planarized surface. The present invention provides a gas barrier film comprising the laminate.

The present inventor has assiduously studied and, as a result, have found that the above object can be solved by using, as a material of an organic layer, a material obtained by curing a polymerizable composition comprising a (meth) acrylate having a polycyclic aromatic skeleton consisting of SP² carbon atoms. Specifically, he has found that the above objection can be solved by the following means.
[1] A barrier laminate comprising at least two organic layers and at least two inorganic layers which are laminated alternately, wherein the organic layer is formed by curing a polymerizable composition comprising a (meth)acrylate having a polycyclic aromatic skeleton consisting of SP² carbon atoms, wherein the inorganic layer comprises an oxide containing aluminium and/or silicon, or a nitride containing aluminium and/or silicon.
[2] The barrier laminate according to [1], wherein the (meth)acrylate having a polycyclic aromatic skeleton consisting of SP² carbon atoms is represented by the following formula (1) or (2) : 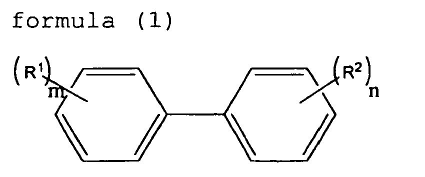 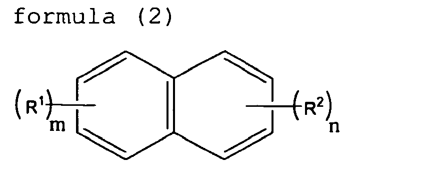 wherein R¹ and R² each represent a substituent; m and n each are an integer of 0 to 5; when m is not less than 2, each R¹ may be the same or different, when n is not less than 2, each R² are the same or different; and a compound represented by the formula (1) or (2) has at least one acryloyloxy group or at least one methacryloyloxy group in the molecule.
[3] The barrier laminate according to [2], wherein the compound represented by the formula (1) or (2) is free from a substituent other than a substituent comprising an acryloyloxy group or an methacryloyloxy group.
[4] The barrier laminate according to any one of [1] to [3], wherein the (meth)acrylate having a polycyclic aromatic skeleton consisting of SP² carbon atoms has two or more functional groups.
[5] The barrier laminate according to any one of [1] to [4], wherein the polymerizable composition comprises a (meth)acrylate having three or more functional groups.
[6] The barrier laminate according to any one of [1] to [5], wherein the the (meth)acrylate having a polycyclic aromatic skeleton consisting of SP² carbon atoms has a molecular weight of 100 to 1000.
[7] The barrier laminate according to any one of [1] to [6], wherein the polymerizable composition comprises 50 to 100% by weight of the (meth)acrylate having a polycyclic aromatic skeleton consisting of SP² carbon atoms based on the total amount of polymerizable monomers in the polymerization composition.
[8] The barrier laminate according to any one of [1] to [7], wherein the polymerizable composition further comprises a (meth) acrylate having three or more functional groups, and the (meth)acrylate having a polycyclic aromatic skeleton consisting of SP² carbon atoms has two functional groups.
[9] The barrier laminate according to any one of [1] to [8], wherein the inorganic layer is formed by a sputtering method.
[10] The barrier laminate according to any one of [1] to [9], wherein at least two organic layers and at least two inorganic layers are laminated alternately.
[11] A gas barrier film comprising a substrate and the barrier laminate according to any one of [1] to [10] on the substrate.
[12] A device comprising the barrier laminate according to any one of [1] to [10].
[13] The device according to [12], having, as a substrate, a gas barrier film comprising a substrate film and the barrier laminate on the substrate film.
[14] The device according to [12], sealed up with a gas barrier film comprising a substrate film and the barrier laminate on the substrate film.
[15] The device according to [12], sealed up with the barrier laminate.
[16] The device according to [12], which is an electronic device.
[17] The device according to [12], which is an organic EL device.
[18] A method for producing the barrier laminate according to any one of [1] to [10], which comprise forming the inorganic layer by a plasma process.

The present invention made it possible to provide a barrier laminate having enhanced barrier property.

### Description of Specific Embodiments

The contents of the present invention are described in detail hereinunder. In this description, the numerical range expressed by the wording "a number to another number" means the range that falls between the former number indicating the lowermost limit of the range and the latter number indicating the uppermost limit thereof. "Organic EL device" as referred to herein means an organic electroluminescent device. In addition, " (meth) acrylate" means acrylate and methacrylate in the present specification.

### (Barrier laminate)

The barrier laminate of the present invention comprises at least one organic layer and at least one inorganic layer, preferably a structure of an inorganic layer on an organic layer, more preferably a structure in which at least two organic layers and at least two inorganic layers are laminated alternately.

The barrier laminate of the present invention may contain a gradation material layer where an organic region and an inorganic region continuously change in the thickness direction of the laminate without diverting the scope of the present invention. As examples of the gradation material, there are mentioned materials described in Kim et al's report, Journal of Vacuum Science and Technology A, Vol. 23 pp. 971-977 (2005 American Vacuum Society); and gradation layers of an organic layer and an inorganic layer laminated with no boundary therebetween as in US Laid-Open 2004-46497.

Not specifically defined, the number of the layers that constitute the barrier laminate is typically preferably 2 to 30, more preferably 3 to 20. The barrier laminate of the present invention may comprise a layer other than an organic layer and an inorganic layer.

### (Organic Layer)

At least one organic layer in the present invention is formed by curing a polymerizable composition comprising a (meth)acrylate having a polycyclic aromatic skeleton consisting of SP² carbon atoms.

Examples of the polycyclic aromatic skeleton in the present invention include a biphenyl skeleton, a naphthalene skeleton, a binaphthyl skeleton, an azulene skeleton, a biphenylene skeleton, an acenaphthylene skeleton, a phenanthrene skeleton, an anthracene skeleton, a triphenylene skeleton, a pyrene skeleton, a chrysene skeleton, a napthacene skeleton, a picene skeleton, a pyrelyne skeleton, and a benzopyrene skeleton.

The (meth) acrylate having a polycyclic aromatic skeleton consisting of SP² carbon atoms may have one or more functional groups, preferably two or more functional groups, still more preferably two functional groups. By employing a (meth)acrylate having two or more functional groups , higher barrier property is achieved.

In the (meth)acrylate having a polycyclic aromatic skeleton consisting of SP² carbon atoms, the (meth)acrylaoyl group may directly bond to the polycyclic aromatic skeleton, or may bond to it via a linking group, preferably bond to it via a divalent linking group. Examples of the divalent linking group include an alkylene group (for example, 1, 3-propylene group, 2, 2-dimethyl-1, 3-propylene group, 2-buthyl-2-ethyl-1, 3-propylene group, 1, 6-hexylene group, 1, 9-nonylene group, 1,12-dodecylene group, 1, 16-hexdecylene), an arylene group (for example, phenylene group and naphthalene group), an ether group, an imino group, a carbonyl group, a sulfonyl group, and a divalent residue formed by serially bonding plurality of those divalent linking groups (for example, polyethyleneoxy group, polypropyleneoxy group, propynyloxyethylene group, butyloyloxypropylene group, caproyloxyethylene group, caproyloxybutylene group, 2, 2-propilenephenylene group). Of those, preferred are an alkylene group, and an arylene group. L¹ and L² may have a substituent. Examples of the substituent which substitutes the linking group include an alkyl group (for example, methyl group, ethyl group, isopropyl group, t-butyl group, n-octyl group, n-decyl group, n-hexadecyl group, cyclopropyl group, cyclopentyl group, cyclohexyl group), an alkenyl group (for example, vinyl group, allyl group, 2-butenyl group, 3-pentenyl group), an aryl group (for example, phenyl group, p-methylphenyl group, naphthyl group, anthryl group, phenanthryl group and pyrenyl group), a halogen atom (for example, fluorine atom, chlorine atom, bromine atom and iodine atom), an acyl group (for example, acetylene group, benzoyl group, formyl group, pivaloyl group), an alkoxycarbonyl group (for example, methoxycarbonyl group and ethoxycarbonyl group), an aryloxycarbonyl group (for example, phenyloxycarbonyl group), a sulfonyl group (for example, methanesulfonyl group and benzenesulfonyl group), a sulfinyl group (for example, methanesulfinyl group and benzenesulfinyl group), a heterocyclic group (it has preferably 1 to 12 carbon atoms, and contains a nitrogen atom, an oxygen atom, or a sulfur atom, and the like as a hetero atom, and may be an aliphatic heterocyclic group, or a heteroaryl group, and examples thereof include imidazolyl group, pyridyl group, quinolyl group, furyl group, thienyl group, piperidyl group, morpholino group, benzoxazolyl group, benzimidazolyl group, benzothiazolyl group, carbazolyl group, azepinyl group). Those substituents may be further substituted.

The (meth) acrylate having a polycyclic aromatic skeleton consisting of SP² carbon atoms may have a substituent without diverting the gist of the present invention.

The molecular weight of the (meth)acrylate having a polycyclic aromatic skeleton consisting of SP² carbon atoms is preferably 100 to 1000, more preferably 200 to 500.

The (meth) acrylate having a polycyclic aromatic skeleton consisting of SP² carbon atoms in the present invention is preferably represented by the following formula (1) or (2): 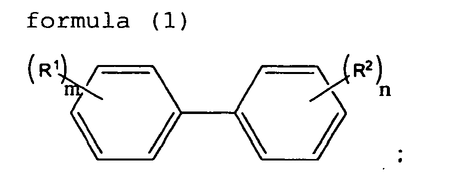 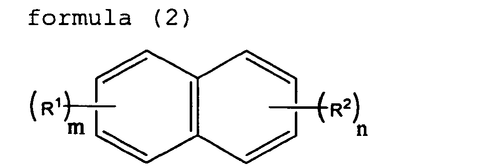 wherein R¹ and R² each represent a substituent; m and n each are an integer of 0 to 5; when m is not less than 2, each R¹ may be the same or different, when n is not less than 2, each R² are the same or different; and a compound represented by the formula (1) or (2) has at least one acryloyloxy group or at least one methacryloyloxy group in the molecule.

Examples of R¹ and R² as the substituent not having an acryloyloxy group and a methacryloyloxy group include an alkyl group, an aryl group, and an alkoxy group. However, the compound represented by the following formula (1) or (2) does not preferably include any substituent other than an acryloyloxy group and a methacryloyloxy group.

The substituent having an acryloyloxy group or a methacryloyloxy group as R¹ and R² may be an acryloyloxy group or a methacryloyloxy group, preferably a group consisting of a divalent linking group and one of an acryloyloxy group and a methacryloyloxy group. The divalent linking group is preferably the above-mentioned linking groups.

m and n are each preferably not less than 2, more preferably 2.

By employing such a compound, the barrier laminate has higher barrier property.

Specific examples of the (meth)acrylate having a polycyclic aromatic skeleton consisting of SP² carbon atoms are shown below, to which, however, the present invention should not be limited.

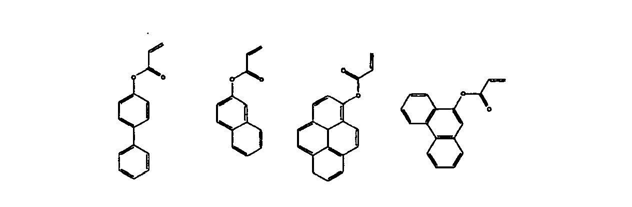

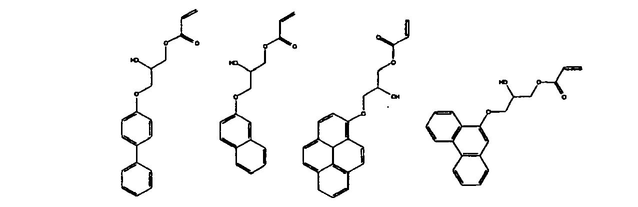

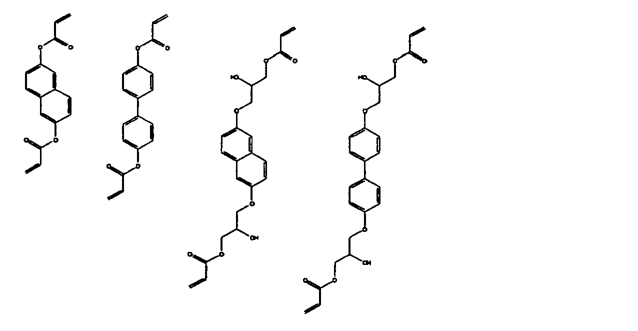

The organic layer in the present intention is more preferably formed by curing a polymerizable composition comprising the (meth)acrylate having a polycyclic aromatic skeleton consisting of SP² carbon atoms and a (meth)acrylate other than the (meth)acrylate having a polycyclic aromatic skeleton consisting of SP² carbon atoms. By employing the other (meth)acrylate, higher barrier property is achieved.

The other (meth) acrylate may have one or more functional groups, preferably three or more functional groups, more preferably three to six functional groups. By employing a (meth) acrylate having three or more functional groups, higher barrier property is achieved.

Preferred examples of the other (meth)acrylate include (meth)acrylates, urethane (meth)acrylates, polyester (meth)acrylates, and epoxy (meth)acrylates. Specific examples of the (meth)acrylate preferably used in the present invention are shown below, to which, however, the present invention should not be limited.

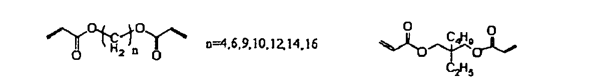

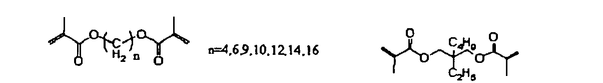

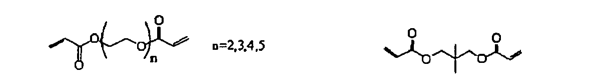

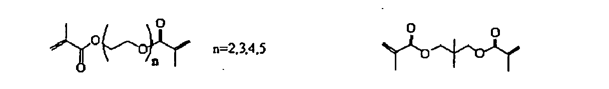

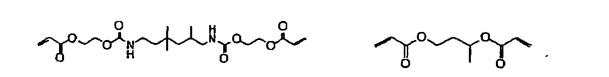

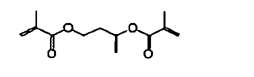

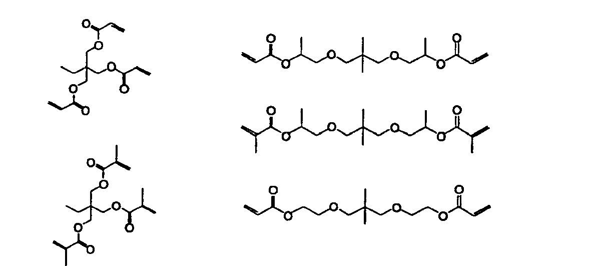

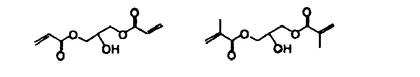

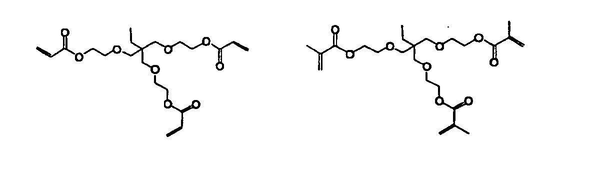

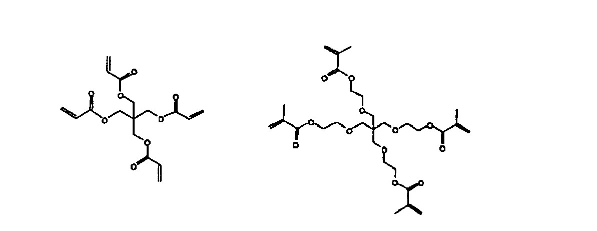

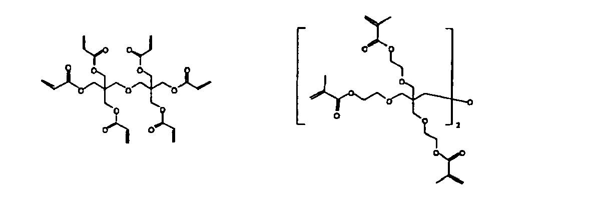

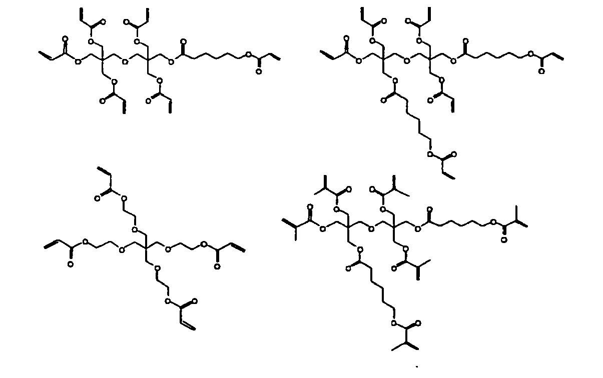

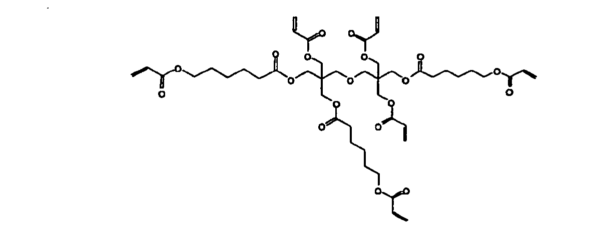

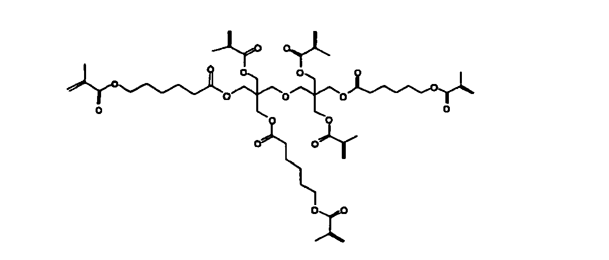

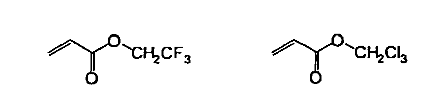

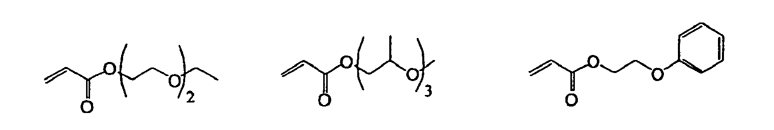

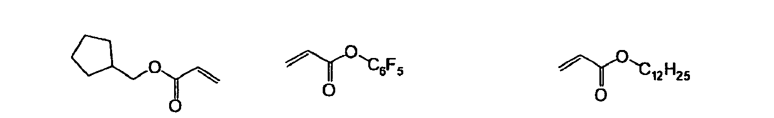

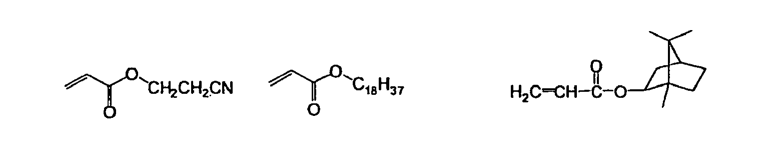

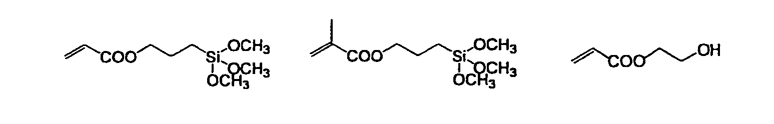

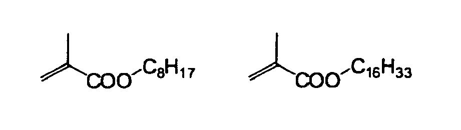

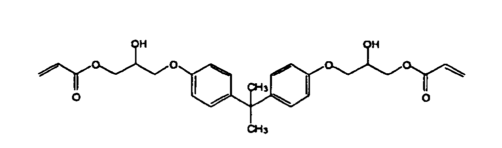

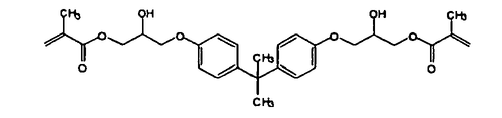

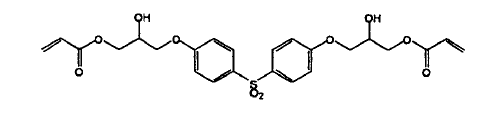

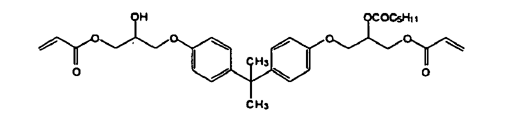

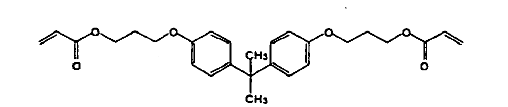

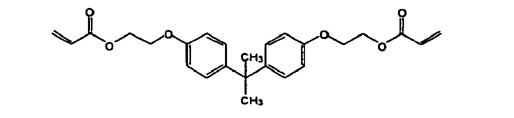

Polmymerizable compounds in the polymerizable composition of the present invention preferably comprises 50 to 100% by weight of the (meth)acrylate having a polycyclic aromatic skeleton consisting of SP² carbon atoms and 0 to 50% by weight of the other (meth)acrylate, more preferably 70 to 100% by weight of the (meth)acrylate having a polycyclic aromatic skeleton consisting of SP² carbon atoms and 0 to 30% by weight of the other (meth)acrylate.

The polymerizable composition may contain a polymerizable monomer other than (meth)acrylates without diverting the gist of the present invention.

### (Acidic monmers)

The polymerizable composition used in the present invention may comprise an acidic monomer. The inclusion of the acidic monomer enhances adhesiveness between layers. The acidic monomer used in the present invention is preferably monomers having a carbonic acid group or a phosphate group, more preferably (meth)acrylates having a carbonic acid group or a phosphate group, still more preferably (meth)acrylates having a phosphate group.

### ((Meth)acrylates having a phosphoester group)

The (meth) acrylate having a phosphate group is preferably a compound represented by the formula (P). The inclusion of the (meth)acrylate compound having a phosphorester group ehnances adhesion to the inorganic layer. 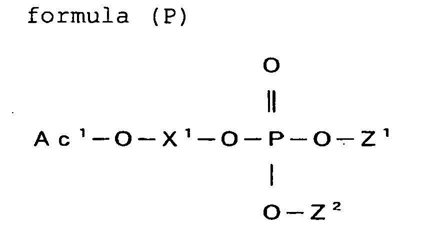 wherein Z¹ represents Ac²-O-X²-, a substituent group not having a polymerizable group, or a hydrogen atom; Z² represents Ac³-O-X³-, a substituent group not having a polymerizable group, or a hydrogen atom; Ac¹, Ac² and Ac³ each represent an acryloyl group or a (meth) acryloyl group; and X¹, X² and X³ each represent a divalent linking group.

The compound represented by the formula (P) is preferably a monofunctional monomer represented by the formula (P-1), a bifunctional monomer represented by the formula (P-2), or a trifunctional monomer represented by the formula (P-3):

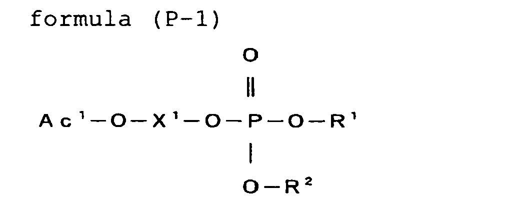

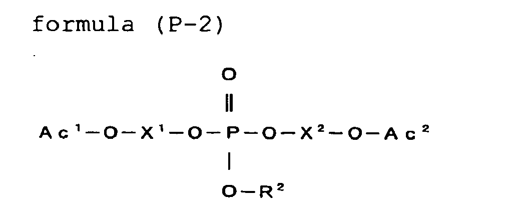

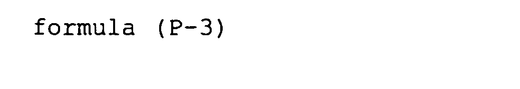

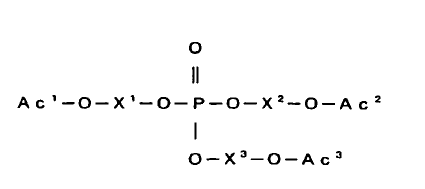

The definitions of Ac¹, Ac², Ac³, X¹, X² and X³ are the same as those in the formula (P). In the formula (P-1) and formula (P-2), R¹ represents a substituent not having a polymerizable group or a hydrogen atom, and R² represents a substituent group not having a polymerizable group, or a hydrogen atom.

In the formula (P), (P-1), (P-2) and (P-3), X¹, X² and X³ each are the same groups as those of L¹ in the formula (2), preferably an alkylene group or an alkyleneoxycarbonylalkylene group.

In the formula (P), (P-1), (P-2) and (P-3), examples of the substituent not having a polymerizable group include an alkyl group, an aryl group, and a group consisting of a combination thereof, preferably an alkyl group.

The carbon number of the alkyl group is preferably 1 to 12, more preferably 1 to 9, still more preferably 1 to 6. Examples of the alkyl group include a methyl group, an ethyl group, a propyl group, a butyl group, a pentyl group and a hexyl group. The alkyl group may be a linear, branched, or cyclic group, preferably a linear alkyl group. The alkyl group may be substituted with an alkoxy group, an aryl group, an aryloxy group, or the like.

The carbon number of the aryl group is preferably 6 to 14, more preferably 6 to 10. Examples of the aryl group include a phenyl group, a 1-naphthyl group and a 2-naphtyl group. The aryl group may be substituted with an alkyl group, an alkoxy group, an aryloxy group, or the like.

In the present invention, the monomer represented by the formula (P) may be used singly or as combined. When the compounds are used as combined, may be used a combination comprising two or more kinds of a monofunctional compound represented by the formula (P-1), a bifunctional compound represented by the formula (P-2) and a trifunctional compound represented by the formula (P-3).

In the present invention, as the above polymerizable monomers having a phosphate group, may be used commercially available compounds such as KAYAMER series manufactured by NIPPON KAYAKU CO., LTD, and Phosmer series manufactured by Uni chemical, and a compound newly synthesized.

Specific examples of the (meth)acrylate having a phosphate group, which is preferably used in the present invention, mentioned below, to which, however, the present invention should not be limited.

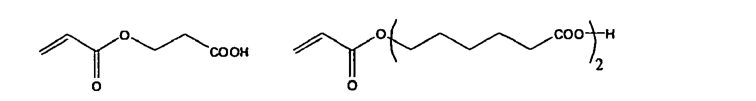

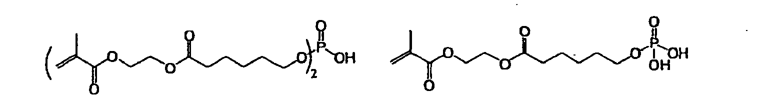

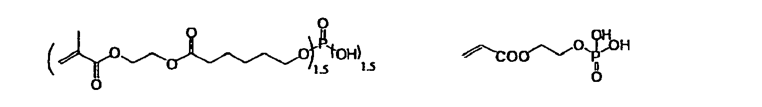

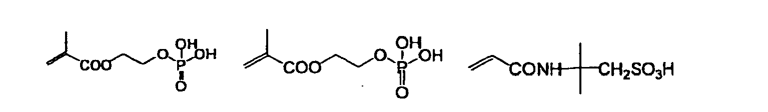

### (Polymerization initiator)

The polymerizable composition in the present invention may include a polymerization initiator. In the case where a photopolymerization initiator is used, its amount is preferably at least 0.1 mol% of the total amount of the polymerizing compound, more preferably from 0.5 to 2 mol%. By setting the thus-designed composition, polymerization reaction though an active ingredient forming reaction may be suitably controlled. Examples of the photopolymerization initiator include Ciba Speciality Chemicals' commercial products, Irgacure series (e.g., Irgacure 651, Irgacure 754, Irgacure 184, Irgacure 2959, Irgacure 907, Irgacure 369, Irgacure 379, Irgacure 819), Darocure series (e.g., Darocure TPO, Darocure 1173), Quantacure PDO; Lamberti's commercial products, Ezacure series (e.g., Ezacure TZM, Ezacure TZT, Ezacure KT046), etc.

### (Method of formation of organic layer).

The method for forming the organic layer is not specifically defined. For example, the layer may be formed according to a solution coating method or a vacuum film formation method. The solution coating method is, for example, a dipping method, an air knife coating method, a curtain coating method, a roller coating method, a wire bar coating method, a gravure coating method, a slide coating method, or an extrusion coating method using a hopper as in USP 2681294. The vacuum film formation method is not specifically defined, but is preferably a film formation method by vapor deposition or plasma CVD. In the present invention, the polymer may be applied for coating as its solution, or a hybrid coating method along with an inorganic material, as in JP-A 2000-323273 and 2004-25732, may also be used.

In the present invention, the composition comprising the polymerizable monomer is cured by irradiation. The light for irradiation is generally a UV ray from a high-pressure mercury lamp or low-pressure mercury lamp. The radiation energy is preferably at least 0.1 J/cm², more preferably at least 0.5 J/cm². (Meth)acrylate series compounds may suffer from interference in polymerization owing to oxygen in air, and therefore, in their polymerization, the oxygen concentration or the oxygen partial pressure is preferably lowered. In the case where the oxygen concentration in polymerization is lowered according to a nitrogen purging method, the oxygen concentration is preferably not more than 2%, more preferably not more than 0.5%. In the case where the oxygen partial pressure in polymerization is lowered by a pressure reduction method, the whole pressure is preferably not more than 1000 Pa, more preferably not more than 100 Pa. Especially preferred is UV polymerization with at least 0.5 J/cm² energy radiation under a condition of reduced pressure of not more than 100 Pa.

The organic layer in the present invention is preferably smooth and preferably has high film hardness. Preferably, the rate of polymerization of monomer is mot less than 85%, more preferably not less than 88%, even more preferably not less than 90%, still more preferably not less than 92%. The rate of polymerization as referred to herein means the ratio of the reacted polymerizable group to all the polymerizing group (acryloyl group and methacryloyl group) in the monomer mixture. The rate of polymerization may be quantitatively determined according to IR absorptiometry.

The thickness of the organic layer is not specifically defined. However, when the layer is too thin, then its thickness could hardly keep uniformity; but when too thick, the layer may be cracked by external force applied thereto and its barrier property may lower. From these viewpoints, the thickness of the organic layer is preferably from 50 nm to 2000 nm, more preferably from 200 nm to 1500 nm.

As so mentioned in the above, the organic layer is preferably smooth. The mean roughness (Ra) at 1 µm square is preferably not more than 1 nm, more preferably not more than 0.5 nm. The surface of the organic layer is required not to have impurities and projections such as particles. Accordingly, it is desirable that the organic layer is formed in a clean room. The degree of cleanness is preferably not more than class 10000, more preferably not more than class 1000.

Preferably, the hardness of the organic layer is higher. It is known that, when the hardness of the organic layer is high, then the inorganic layer may be formed smoothly and, as a result, the barrier level of the gas barrier film is thereby improved. The hardness of the organic layer may be expressed as a microhardness based on a nano-indentation method. The microhardness of the organic layer is preferably at least 100 N/mm, more preferably at least 150 N/mm.

### (Inorganic Layer)

The inorganic layer is, in general, a layer of a thin film formed of a metal compound as defined below. For forming the inorganic layer, employable is any method capable of producing the intended thin film. For it, for example, suitable are physical vapor deposition methods (PVD) such as vapor evaporation method, sputtering method, ion plating method; various chemical vapor deposition methods (CVD); liquid phase growth methods such as plating or sol-gel method. Not specifically defined, the component to be in the inorganic layer may be any one satisfies the above-mentioned requirements. It includes oxides and nitrides, of Si and Al.

These may contain any other element as a subsidiary component.

Preferably, the surface smoothness of the inorganic layer formed in the present invention is less than 1 nm in terms of the mean roughness (Ra value) at 1 µm square, more preferably not more than 0.5 nm.

Not specifically defined, the thickness of the inorganic layer is generally within a range of from 5 to 500 nm/layer, preferably from 10 to 200 nm/layer. The inorganic layer may be a laminate composed of a plurality of sub-layers. In this case, each sub-layer may have the same composition, or a different composition. In addition, as so mentioned hereinabove and as disclosed in UP Laid-Open 2004-46497, the inorganic layers may be gradation layers of which the composition changes continuously in the thickness direction of the layer, with no definite boundary to the adjacent inorganic layer.

### (Lamination of Organic Layer and Inorganic Layer)

The organic layer and the inorganic layer may be laminated by repeated film formation to form the organic layer and the inorganic layer in a desired layer constitution. In case where the inorganic layer is formed according to a vacuum film formation method such as sputtering method, vacuum evaporation method, ion plating method or plasma CVD method, then it is desirable that the organic layer is also formed according to a vacuum film formation method such as the above-mentioned flash vapor deposition method. While the barrier layer is formed, it is especially desirable that the organic layer and the inorganic layer are laminated all the time in a vacuum of not more than 1000 Pa, not restoring the pressure to an atmospheric pressure during the film formation. More preferably, the pressure is not more than 100 Pa, even more preferably not more than 50 Pa, still more preferably not more than 20 Pa.

Particularly, since at least two organic layers and at least two inorganic layers are laminated alternately, the present invention can achieve higher barrier property. The alternate layer constitution may be a layer constitution in which an organic layer, an inorganic layer, an organic layer and an inorganic layer are laminated in that order from its substrate site, or a layer constitution in which an inorganic layer, an organic layer, an inorganic layer and an organic layer are laminated in that order from its substrate site.

### (Functional Layer)

The device of the present invention may have a functional layer on the barrier laminate or in any other position. The functional layer is described in detail in JP-A 2006-289627, paragraphs 0036 to 0038. Examples of other functional layers than those are a matting agent layer, a protective layer, an antistatic layer, a planarizing layer, an adhesiveness improving layer, a light shielding layer, an antireflection layer, a hard coat layer, a stress relaxing layer, an antifogging layer, an anti-soiling layer, a printable layer, an adhesive layer, etc.

### (Use of Barrier Laminate)

In general, the barrier laminate of the present invention is formed on a support. Selecting the support, the barrier laminate may have various applications. The support includes a substrate film, as well as various devices, optical members, etc. Concretely, the barrier laminate of the present invention may be used as a barrier layer of a gas barrier film. The barrier laminate and the gas barrier film of the present invention may be used for sealing up devices that require gas-barrier property. The barrier laminate and the gas barrier film of the present invention may apply optical members. These are described in detail hereinunder.

### (Gas barrier film)

The gas barrier film comprises a substrate film and a barrier laminate formed on the substrate film. In the gas barrier film, the barrier laminate of the present invention may be provided only one surface of the substrate film, or may be provided on both surfaces thereof. The barrier laminate of the present invention may be laminated in an order of an inorganic layer and an organic layer from the side of the substrate film; or may be laminated in an order of an organic layer and an inorganic layer from it. The uppermost layer of the laminate of the present invention may be an inorganic layer or an organic layer.

The gas barrier film of the present invention is a film substrate having a barrier layer that functions to block oxygen, water, nitrogen oxide, sulfur oxide, ozone and others in air.

Not specifically defined, the number of the layers that constitute the gas barrier film may be typically from 2 layers to 30 layers, more preferably from 3 layers to 20 layers.

The gas barrier film may have any other constitutive components (e.g., functional layers such as adhesive layer) in addition to the barrier laminate and the substrate film. The functional layer may be disposed on the barrier laminate, or between the barrier laminate and the substrate film, or on the side (back) of the substrate film not coated with the barrier laminate.

### (Plastic Film)

In the gas barrier film of the present invention, the substrate film is generally a plastic film. Not specifically defined in point of the material and the thickness thereof, the plastic film usable herein may be any one capable of supporting a laminate of an organic layer and an inorganic layer; and it may be suitably selected depending on the use and the object thereof. Concretely, the plastic film includes thermoplastic resins such as polyester resin, methacryl resin, methacrylic acid-maleic anhydride copolymer, polystyrene resin, transparent fluororesin, polyimide, fluoropolyimide resin, polyamide resin, polyamidimide resin, polyetherimide resin, cellulose acylate resin, polyurethane resin, polyether ether ketone resin, polycarbonate resin, alicyclic polyolefin resin, polyarylate resin, polyether sulfone resin, polysulfone resin, cycloolefin copolymer, fluorene ring-modified polycarbonate resin, alicyclic-modified polycarbonate resin, fluorene ring-modified polyester resin, acryloyl compound.

In case where the gas barrier film of the present invention is used as a substrate of a device such as an organic EL device to be mentioned hereinunder, it is desirable that the plastic film is formed of a heat-resistant material. Concretely, the plastic film is preferably formed of a heat-resistant transparent material having a glass transition temperature (Tg) of not lower than 100°C and/or a linear thermal expansion coefficient of not less than 40 ppm/°C. Tg and the linear expansion coefficient may be controlled by the additives to the material. The thermoplastic resin of the type includes, for example, polyethylene naphthalate (PEN: 120°C), polycarbonate (PC: 140°C), alicyclic polyolefin (e.g., Nippon Zeon's Zeonoa 1600: 160°C), polyarylate (PAr: 210°C), polyether sulfone (PES: 220°C), polysulfone (PSF: 190°C), cycloolefin copolymer (COC, compound described in JP-A 2001-150584: 162°C), polyimide (Mitsubishi gas chemical company' s Neopulim : 260°C), fluorene ring-modified polycarbonate (BCF-PC, compound described in JP-A 2000-227603: 225°C), alicyclic-modified polycarbonate (IP-PC, compound described in JP-A 2000-227603: 205°C), acryloyl compound (compound described in JP-A 2002-80616: 300°C or more) (the parenthesized data are Tg). In particular, for high transparency, use of alicyclic polyolefin is preferred.

In the case where the gas barrier film of the present invention is used in combination with a polarizing plate, it is preferable that the gas barrier layer surface of the gas barrier film is faced at the inside of a cell and is disposed in the innermost (adjacent to the device). At that time, since the gas barrier film is disposed in the inside of the cell relative to the polarizing plate, a retardation value of the gas barrier film is important. As to a use form of the gas barrier film in such an embodiment, it is preferable that a barrier film using a base material film having a retardation value of not more than 10 nm and a circular polarizing plate ((quarter-wave plate) + (half-wave plate) + (linear polarizing plate)) are laminated and used, or that a linear polarizing plate is combined with a gas barrier film using a base material film having a retardation value of from 100 nm to 180 nm, which can be used as a quarter-wave plate, and used.

Examples of the base material film having a retardation of not more than 10 nm include cellulose triacetate (FUJITAC, manufactured by Fujifilm Corporation), polycarbonates (PURE-ACE, manufactured by Teijin Chemicals Ltd.; and ELMECH, manufactured by Kaneka Corporation), cycloolefin polymers (ARTON, manufactured by JSR Corporation; and ZEONOR, manufactured by Zeon Corporation), cycloolefin copolymers (APEL (pellet), manufactured by Mitsui Chemicals, Inc.; and TOPAS (pellet), manufactured by Polyplastics Co., Ltd.), polyarylates (U100 (pellet), manufactured by Unitika Ltd.) and transparent polyimides (NEOPULIM, manufactured by Mitsubishi Gas Chemical Company).

Also, films obtained by properly stretching the foregoing film to adjust it so as to have a desired retardation value can be used as the quarter-wave plate.

In view of the matter that the gas barrier film of the present invention is utilized as a device such as organic EL devices, the plastic film must be transparent, namely its light transmittance is usually not less than 80%, preferably not less than 85%, and more preferably not less than 90%. The light transmittance can be measured by a method described in JIS-K7105, namely by measuring a total light transmittance and an amount of scattered light using an integrating sphere type light transmittance analyzer and subtracting the diffuse transmittance from the total light transmittance.

Even in the case where the gas barrier film of the present invention is used for display use, for example, when it is not disposed on the side of an observer, the transparency is not always required. Accordingly, in such case, an opaque material can also be used as the plastic film. Examples of the opaque material include a known liquid crystal polymer such as polyimides and polyacrylonitrile.

The thickness of the plastic film to be used for the gas barrier film of the present invention is properly chosen depending upon the use and therefore, is not particularly limited. It is typically from 1 to 800 µm, preferably from 10 to 200 µm. These plastic films may have a functional layer such as a transparent conductive layer and a primer layer. The functional layer is described in detail in paragraphs 0036 to 0038 of JP-A-2006-289627.

### (Device)

The barrier laminate and the gas barrier film of the present invention are favorably used for devices that are deteriorated by the chemical components in air (e.g., oxygen, water, nitrogen oxide, sulfur oxide, ozone). Examples of the devices are, for example, organic EL devices, liquid-crystal display devices, thin-film transistors, touch panels, electronic papers, solar cells, other electronic devices. More preferred are organic EL devices.

The barrier laminate of the present invention may be used for film-sealing of devices. Specifically, this is a method of providing a barrier laminate of the present invention on the surface of a device serving as a support by itself. Before providing the barrier laminate, the device may be covered with a protective layer.

The gas barrier film of the present invention may be used as a substrate of a device or as a film for sealing up according to a solid sealing method. The solid sealing method comprises forming a protective layer on a device, then forming an adhesive layer and a gas barrier film as laminated thereon, and curing it. Not specifically defined, the adhesive may be a thermosetting epoxy resin, a photocurable acrylate resin, etc.

### (Organic EL Device)

Examples of an organic EL device with a gas barrier film are described in detail in JP-A 2007-30387.

### (Liquid-Crystal Display Device)

A reflection-type liquid-crystal display device has a constitution of a lower substrate, a reflection electrode, a lower alignment film, a liquid-crystal layer, an upper alignment film, a transparent electrode, an upper substrate, a λ/4 plate and a polarizing film, formed in that order from the bottom. In this, the gas barrier film of the present invention may be used as the transparent electrode substrate and the upper substrate. In color displays, it is desirable that a color filter layer is additionally provided between the reflection electrode and the lower alignment film, or between the upper alignment film and the transparent electrode. A transmission-type liquid-crystal display device has a constitution of a backlight, a polarizer, a λ/4 plate, a lower transparent electrode, a lower alignment film, a liquid-crystal layer, an upper alignment film, an upper transparent electrode, an upper substrate, a λ/4 plate and a polarizing film, formed in that order from the bottom. In this, the substrate of the present invention may be sued as the upper transparent electrode and the upper substrate. In color displays, it is desirable that a color filter layer is additionally provided between the lower transparent electrode and the lower alignment film, or between the upper alignment film and the transparent electrode. Not specifically defined, the type of the liquid-crystal cell is preferably a TN (twisted nematic) type, an STN (super-twisted nematic) type, a HAN (hybrid aligned nematic) type, a VA (vertically alignment) type, an ECB (electrically controlled birefringence) type, anOCB (optically compensatory bent) type, an IPS (in-plane switching) type, or a CPA (continuous pinwheel alignment) type.

### (Solar Cell)

The gas barrier film of the invention can be used also as a sealing film for solar cell devices. Preferably, the gas barrier film of the invention is used for sealing a solar cell device in such a manner that its adhesive layer is on the side near to the solar cell device. The solar cell devices for which the gas barrier film of the invention is favorably used are not specifically defined. For example, they include single crystal silicon-based solar cell devices, polycrystalline silicon-based solar cell devices, single-junction or tandem-structure amorphous silicon-based solar cell devices, gallium-arsenic (GaAs), indium-phosphorus (InP) or the like III-V Group compound semiconductor-based solar cell devices, cadmium-tellurium (CdTe) or the like II-VI Group compound semiconductor-based solar cell devices, copper/indium/selenium (CIS-based), copper/indium/gallium/selenium (CIGS-based), copper/indium/gallium/selenium/sulfur (CIGSS-based) or the like I-III-VI Group compound semiconductor-based solar cell devices, dye-sensitized solar cell devices, organic solar cell devices, etc. Above all, in the invention, the solar cell devices are preferably copper/indium/selenium (CIS-based), copper/indium/gallium/selenium (CIGS-based), copper/indium/gallium/selenium/sulfur (CIGSS-based) or the like I-III-VI Group compound semiconductor-based solar cell devices.

### <Electronic paper>

The gas barrier film of the invention can be used in an electronic paper. The electronic paper is a reflection-type electronic display capable of attaining a high precision and a high contrast.

The electronic paper has a display media and a TFT driving the display media on a substrate. Any known display media can be used in the electronic paper. For example, any display media of electophoretic-type, electopowder flight-type, charged tonner-type, electrochromic type can be preferably used. Among them, electophoretic display media is more preferable and microcapsule-type electophoretic display media is particularly preferable. The electophoretic display media has a plural number of capsules and each capsule has at least one particle capable of moving in a suspension flow. The at least one particle is preferably an electrophoretic particle or a spinning ball. The electrophretic display media has a first plane and a second plane that are placed in parallel, and an image is displayed through one of the two planes.

A TFT formed on a substrate comprises a gate electrode, gate insulating layer, an active layer, a source electrode and a drain electrode. A TFT also comprises a resistance layer between the active layer and the source electrode and/or between the active layer and the drain electrode to attain electric connection.

When a color display with a high precision is produced, TFT's are preferably formed on a color filter to precisely align them. Normal TFT with a low electric efficiency can not be down-sized much while obtaining the necessary driving current, and when a high precision display is pursued, the rate of the area for the TFT in a pixel must be high. When the rate of the area for the TFT is high, the rate of the opening area and contrast are low.
Even when a transparent amorphous IGZO-type TFT is used, light transmittance is not 100% and reduction of contrast is unavoidable. Use of the TFT disclosed in JP-A 2009-21554 and the like can reduce the rate of the TFT in a pixel and improve the rate of the opening area and contrast. High precision can also be attained by forming this type of TFT on a color filter directly.

### (Others)

Other applications of the invention are thin-film transistors as in JP-T H10-512104, and touch panels as in JP-A 5-127822, 2002-48913.

### (Optical Member)

An example of the optical member that comprises the barrier laminate of the present invention is a circular polarizer.

### (Circular Polarizer)

Laminating a gas barrier film of the invention with a λ/4 plate and a polarizer gives a circular polarizer. In this case, the components are so laminated that the slow axis of the λ/4 plate could cross the absorption axis of the polarizer at an angle of 45°. The polarizer is preferably stretched in the direction of 45° from the machine direction (MD) thereof; and for example, those described in JP-A 2002-865554 are favorably used.

### EXAMPLES

The characteristics of the present invention are described more concretely with reference to the following Examples. Accordingly, the present invention should not be limitatively interpreted by the Examples mentioned below.

### Formation of Gas Barrier Film (1)

### 1. Formation of Organic Layer through polymerization under normal pressure, and Fabrications of Gas barrier film

A polyethylene naphthalate film (PEN film, having a thickness of 100 µm, Teijin DuPont's trade name, Teonex Q65FA) was cut into 20 cm square pieces, and a barrier laminate was formed on the side of the smooth surface thereof, and the thus-constructed samples were evaluated.

### (1) Formation of First Layer (organic layer):

On the PEN film, a mixture solution of a monomer mixture having a composition shown in the following table (20 g), a UV polymerization initiator (Ciba, Irgacure 907) (0.6 g) and 2-butanone (190 g) was applied, using a wire bar. This was put into a chamber having an oxygen concentration of 0.1% after nitrogen substitution, and the organic layer was cured therein through irradiation with UV light from a high-pressure mercury lamp (integrated radiation, about 1 J/cm²), thereby forming an organic layer having a thickness of 1000 nm ± 50 nm.

### (2) Formation of Second Layer (inorganic layer):

Using a sputtering device, an inorganic layer (aluminium oxide) was formed on the above organic layer. Aluminium was used as the target; argon was used as the discharge gas; and oxygen was used as the reaction gas. The film formation pressure was 0.1 Pa; and the ultimate film thickness was 50 nm. In that manner, gas barrier films having an inorganic layer laminated on an organic layer were constructed.

The characteristic values (Ra, water vapor permeability) of the obtained gas barrier films are shown in Table 1.

### (Determination of Water Vapor Permeability according to Ca Method (Barrier property))

According to the method described by G. NISATO, P. C. P. BOUTEN, P. J. SLIKKERVEER, et all, in SID Conference Record of the International Display Research Conference, pp. 1435-1438 (measurement method with calcium), the samples were analyzed for the water vapor permeability at 40°C and a relative humidity of 90%.
×: not less than 0.005 g/m²/day
○: not less than 0.001 g/m²/day to less than 0.005 g/m²/day
○○: less than 0.001 g/m²/day

### (Measurement of Smoothness (Ra))

Using an atomic force microscope (AFM), the surface smoothness of the inorganic layer formed in the above (2) was measured. In this case, the smoothness was expressed as a mean roughness Ra within a sample area of 1 µm square. The Ra was evaluated by the following gauge.
××: not less than 3 nm
×: not less than 1 nm to less than 3 nm
○: less than 1 nm

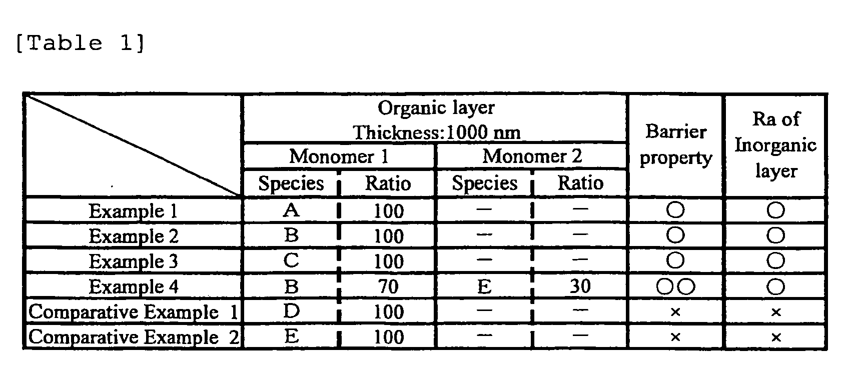

Compounds used in the Example are as follows :

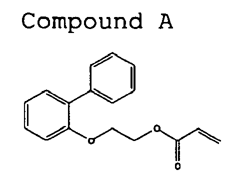

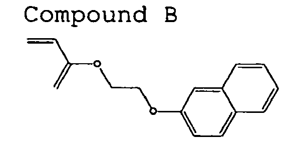

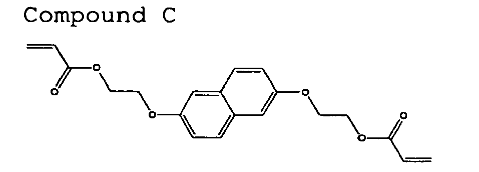

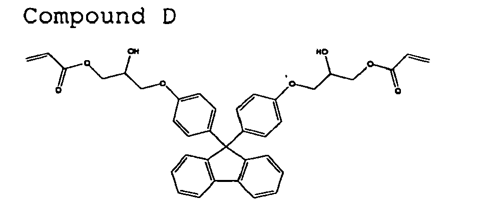

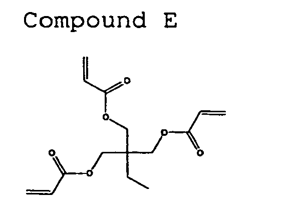

As is clear from the result of the above table, all the gas barrier films of the present invention showed the Water Vapor Permeability of less than 0.005 g/m²/day. The inorganic layer in the present invention achieved its surface smoothness. It was found that particularly excellent effect was achieved by using Compound C, which has two functional groups, as the (meth)acrylate having a polycyclic aromatic structure, and Compound E, which is a (meth) acrylate having three or more functional groups.

### 2. Formation of Gas Barrier Film having a multilayer structure

A gas barrier film having a multilayer structure was formed in the same manner as the gas barrier film formed in the above 1, in which, however, further two organic layers and two inorganic layers were laminated thereon. It was confirmed that each gas barrier film has higher barrier property than each gas barrier film corresponding to the gas barrier film formed in the above 1.

### Formation of Gas Barrier Film (2)

Gas barrier films of Examples 5 to 8 were formed in the same manner as in the above, expect that the compositions of the first layer (organic layer) were changed to compositions comprising a polymerizable monomer shown in Table 1 (19 g), a phosphoester acrylate shown below (manufactured by NIPPON KAYAKU Co., Ltd., KAYAMER PM-21, 1 g), a UV polymerization initiator (manufactured by Lamberti, Ezacure KT046, 0. 6 g) and 2-butanone (190 g). The water vapor permeability (barrier property) of the obtained gas barrier films were evaluated by the same method, then obtaining similar properties. Also, adhesiveness for the gas barrier films was evaluated by the following method.

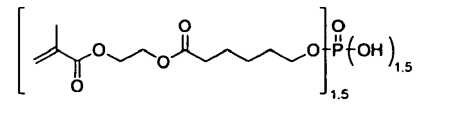

### [Measurement for adhesiveness]

In order to evaluate adhesiveness of each gas barrier films, cross-cut adhesiveness test compliant to JIS K5400 was carried out. The surface of the gas barrier films having the above construction was cut in at the entering angle of 90 degree toward the film surface at 1 mm interval, thereby producing one hundred of cross-cut at 1 mm interval. On the surface thereof, Mylar tape having the wide of 2 cm (manufactured by Nitto Denko, polyester tape, No. 31B) was attached, and then was peeled off using a tape peeling testing machine. The results are shown according to the following gauge.
Ⓞ: 90 or more of cross-cut of 100 of cross-cut remain without peeling
O: 50 or more of cross-cut of 100 of cross-cut remain without peeling
X: less than 50 of cross-cut of 100 of cross-cut remain

**[Table 2]**

| | Monomer 1 | | Monomer 2 | | Barrier property | Adhesiveness |
|---|---|---|---|---|---|---|
| | Species | Ratio | Species | Ratio | | |
| Example 5 | A | 100 | - | - | ○ | ⊚ |
| Example 6 | B | 100 | - | - | ○ | ⊚ |
| Example 7 | C | 100 | - | - | ○ | ⊚ |
| Example 8 | B | 70 | E | 30 | ⊚ | ⊚ |

As is clear from the above table, the gas barrier films of Examples 5 to 8 are excellent in barrier property. It was confirmed that the gas barrier films having excellent adhesiveness are obtained by adding the phosphoester acrylate.

### 3. Construction and Evaluation of Organic EL Device Construction of Organic EL Device:

An ITO film-coated conductive glass substrate (surface resistivity, 10 Ω/square) was washed with 2-propanol, and then subjected to UV-ozone treatment for 10 minutes. On this substrate (anode), the following organic compound layers were deposited in order according to a vapor deposition method.

| | | |
|---|---|---|
| (First Hole Transportation Layer) | | |
| | Copper Phthalocyanine | thickness 10 nm |
| (Second Hole Transportation Layer) | | |
| | N,N'-diphenyl-N,N'-dinaphthylbenzidine | thickness 40 nm |
| (Light Emission Layer serving also as electron transportation layer) | | |
| | Tris(8-hydroxyquinolinato)aluminium | thickness 60 nm |

Finally, lithium fluoride was vapor-deposited in a thickness of 1 nm and metal aluminium was in a thickness of 100 nm in that order, serving as a cathode. On this, a silicon nitride film having a thickness of 5 µm was formed according to a parallel plate CVD method, thereby constructing an organic EL device.

Using a thermosetting adhesive (Daizo-Nichimori's Epotec 310), the device was stuck to the gas barrier film, and heated at 65°C for 3 hours to cure the adhesive. Thus sealed, 20 samples of every organic EL device were constructed.

Immediately after their construction, the organic EL devices were driven for light emission at a voltage of 7V applied thereto, using a source measure unit, Keithley' s SMU2400 Model. Using a microscope, the surface of each sample was checked for its condition with light emission, and it was confirmed that all the devices gave uniform light emission with no dark spot.

Next, the devices were kept in a dark room at 60°C and a relative humidity of 90% for 500 hours, and checked for the surface condition with light emission. The ratio of the samples having given darks spots larger than 300 µm in diameter are defined as a failure ratio, and the failure ratio of each device was not more than 1%.

The barrier laminate produced by the method of the present invention has a low water vapor permeability. The present invention makes it possible to easily produce a gas barrier film having the barrier laminate of the present invention. Since the organic EL device of the present invention has a low water vapor permeability and low failure ratio, it has high industrial availability and is useful.

In addition, since the gas barrier film of the present invention makes it possible to smooth a surface of the inorganic layer on the organic layer, it is particularly preferably in the case where it is used as a substrate of a device.

## Claims

1. A barrier laminate comprising at least two organic layers and at least two inorganic layers, which are laminated alternately, wherein the organic layer is formed by curing a polymerizable composition comprising a (meth)acrylate having a polycyclic aromatic skeleton consisting of SP² carbon atoms, wherein the inorganic layer comprises an oxide containing aluminium and/or silicon, or a nitride containing aluminium and/or silicon.

2. The barrier laminate according to Claim 1, wherein the (meth)acrylate having a polycyclic aromatic skeleton consisting of SP² carbon atoms is represented by the following formula (1) or (2) : 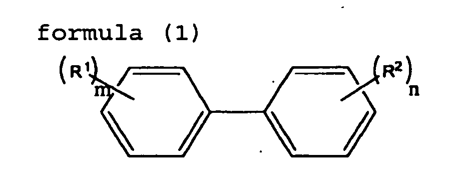 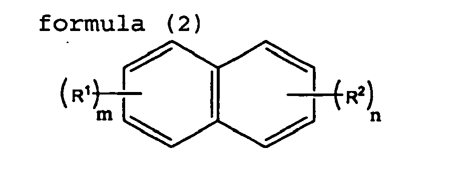 wherein R¹ and R² each represent a substituent; m and n each are an integer of 0 to 5; when m is not less than 2, each R¹ may be the same or different, when n is not less than 2, each R² are the same or different; and a compound represented by the formula (1) or (2) has at least one acryloyloxy group or at least one methacryloyloxy group in the molecule.

3. The barrier laminate according to Claim 1 or 2, wherein the (meth)acrylate having a polycyclic aromatic skeleton consisting of SP² carbon atoms has two or more functional groups.

4. The barrier laminate according to any one of Claims 1 to 3, wherein the polymerizable composition comprises a (meth)acrylate having three or more functional groups.

5. The barrier laminate according to any one of Claims 1 to 4, wherein the inorganic layer is formed by a sputtering method.

6. A gas barrier film comprising a substrate and the barrier laminate according to any one of Claims 1 to 5 on the substrate.

7. A device comprising the barrier laminate according to any one of Claims 1 to 5.

8. The device according to Claim 7, having, as a substrate, the gas barrier film according to Claim 6.

9. The device according to Claim 7 or 8, sealed up with the gas barrier film according to Claim 6, or the barrier laminate according to any one of Claims 1 to 5.

10. The device according to any one of Claims 7 to 9, which is an electronic device.

11. The device according to any one of Claims 7 to 9, which is an organic EL device.

12. A method for producing the barrier laminate according to any one of Claims 1 to 5, which comprise forming the inorganic layer by a plasma process.

## Patentansprüche

1. Sperrschichtlaminat, umfassend zumindest zwei organische Schichten und zumindest zwei anorganische Schichten, die alternierend laminiert sind, worin die organische Schicht gebildet ist durch Härten einer polymerisierbaren Zusammensetzung, umfassend ein (Meth)acrylat mit einem polycyclischen aromatischen Gerüst, bestehend aus SP²-Kohlenstoffatomen, worin die anorganische Schicht ein Oxid, umfassend Aluminium und/oder Silizium, oder ein Nitrid, umfassend Aluminium und/oder Silizium, enthält.

2. Sperrschichtlaminat nach Anspruch 1, worin das (Meth)acrylat mit einem polycyclischen aromatischen Gerüst, bestehend aus SP²-Kohlenstoffatomen, dargestellt ist durch die folgende Formel (1) oder (2): 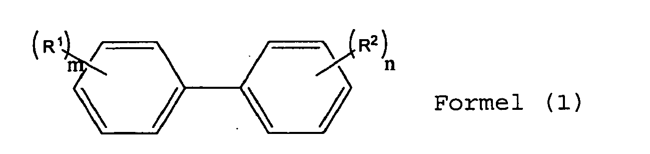 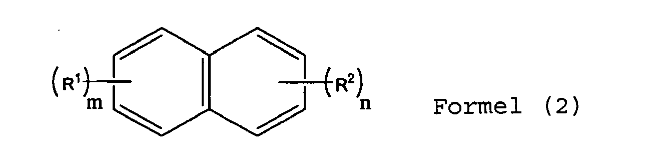 worin R¹ und R² jeweils einen Substituenten bedeuten, m und n jeweils eine ganze Zahl von 0 bis 5 sind; wenn m nicht weniger als 2 ist, können die Gruppen R¹ jeweils gleich oder verschieden sein, wenn n nicht kleiner als 2 ist, können die Gruppen R² jeweils gleich oder verschieden sein, und worin eine Verbindung mit der Formel (1) oder (2) zumindest eine Acryloyloxygruppe oder zumindest eine Methacryloyloxygruppe im Molekül aufweist.

3. Sperrschichtlaminat nach Anspruch 1 oder 2, worin das (Meth)acrylat mit einem polycyclischen aromatischen Gerüst, bestehend aus SP²-Kohlenstoffatomen, zwei oder mehrere funktionelle Gruppen hat.

4. Sperrschichtlaminat nach einem der Ansprüche 1 bis 3, worin die polymerisierbare Zusammensetzung ein (Meth)acrylat mit 3 oder mehr funktionellen Gruppen umfasst.

5. Sperrschichtlaminat nach einem der Ansprüche 1 bis 4, worin die anorganische Schicht durch ein Sputterverfahren gebildet ist.

6. Gassperrfilm, umfassend ein Substrat und das Sperrschichtlaminat nach einem der Ansprüche 1 bis 5 auf dem Substrat.

7. Vorrichtung, umfassend das Sperrschichtlaminat nach einem der Ansprüche 1 bis 5.

8. Vorrichtung nach Anspruch 7, umfassend den Gassperrfilm nach Anspruch 6 als Substrat.

9. Vorrichtung nach Anspruch 7 oder 8, abgedichtet mit dem Gassperrfilm nach Anspruch 6 oder dem Sperrschichtlaminat nach einem der Ansprüche 1 bis 5.

10. Vorrichtung nach einem der Ansprüche 7 bis 9, die eine elektronische Vorrichtung ist.

11. Vorrichtung nach einem der Ansprüche 7 bis 9, die eine organische EL-Vorrichtung ist.

12. Verfahren zur Erzeugung des Sperrschichtlaminates nach einem der Ansprüche 1 bis 5, umfassend das Bilden der anorganischen Schicht durch einen Plasmavorgang.

## Revendications

1. Stratifié barrière comprenant au moins deux couches organiques et au moins deux couches inorganiques, lesquelles sont stratifiées de manière alternée, dans lequel la couche organique est formée par durcissement d'une composition polymérisable comprenant un (méth)acrylate ayant un squelette aromatique polycyclique constitué d'atomes de carbone SP², dans lequel la couche inorganique comprend un oxyde contenant de l'aluminium et/ou du silicium, ou un nitrure contenant de l'aluminium et/ou du silicium.

2. Stratifié barrière selon la revendication 1, dans lequel le (méth)acrylate ayant un squelette aromatique polycyclique constitué d'atomes de carbone SP² est représenté par la formule (1) ou (2) suivante : 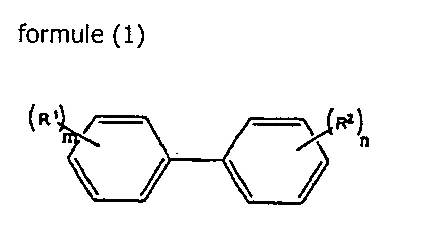 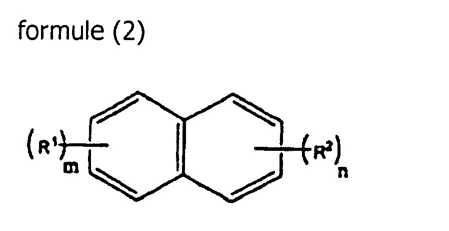 dans lesquelles R¹ et R² représentent chacun un substituant ; m et n sont chacun un nombre entier de 0 à 5 ; lorsque m n'est pas inférieur à 2, les R¹ peuvent être identiques ou différents, lorsque n n'est pas inférieur à 2, les R² sont identiques ou différents ; et un composé représenté par la formule (1) ou (2) présente au moins un groupe acryloyloxy et au moins un groupe méthacryloyloxy dans la molécule.

3. Stratifié barrière selon la revendication 1 ou 2, dans lequel le (méth)acrylate ayant un squelette aromatique polycyclique constitué d'atomes de carbone SP² présente deux groupes fonctionnels ou plus.

4. Stratifié barrière selon l'une quelconque des revendications 1 à 3, dans lequel la composition polymérisable comprend un (méth)acrylate ayant trois groupes fonctionnels ou plus.

5. Stratifié barrière selon l'une quelconque des revendications 1 à 4, dans lequel la couche inorganique est formée par un procédé de pulvérisation cathodique.

6. Film barrière au gaz comprenant un substrat et le stratifié barrière selon l'une quelconque des revendications 1 à 5 sur le substrat.

7. Dispositif comprenant le stratifié barrière selon l'une des revendications 1 à 5.

8. Dispositif selon la revendication 7 présentant, comme substrat, le film barrière au gaz selon la revendication 6.

9. Dispositif selon la revendication 7 ou 8, scellé avec le film barrière au gaz selon la revendication 6, ou le stratifié barrière selon l'une quelconque des revendications 1 à 5.

10. Dispositif selon l'une quelconque des revendications 7 à 9, lequel est un dispositif électronique.

11. Dispositif selon l'une quelconque des revendications 7 à 9, lequel est un dispositif EL organique.

12. Procédé de production du stratifié barrière selon l'une quelconque des revendications 1 à 5, lequel comprend la formation de la couche inorganique par un procédé au plasma.
